# EUROPEAN PATENT SPECIFICATION

(11) **EP 2 269 351 B1**
(45) Date of publication and mention of the grant of the patent: **01.10.2014**
(21) Application number: 09739451.4
(22) Date of filing: 22.04.2009
(51) Int. Cl.: H04L 27/20

(54) **Tetra DMO range extension**
Tetra-DMO-Bereichserweiterung
Extension de portée DMO tetra

(30) Priority: 01.05.2008 US 49634
(43) Date of publication of application: 05.01.2011
(73) Proprietor: Motorola Solutions, Inc., Schaumburg IL 60196 (US)
(72) Inventor: SHIMON, Guy, 64684 Tel-aviv (IL); DIGMY, Ronen, 55402 Kiryat Ono (IL); KAUFMAN, Kalman, 46330 Hertzelia (IL); NISSIM, Rami, 75420 Reshon Letzion (IL); SERFATY, Salomon, 60950 Gaash (IL); TZIFRONI, Nitzan, 62033 Tel Aviv-yaffo (IL)
(74) Representative: Maiwald Patentanwalts GmbH
(86) International application number: PCT/US2009/041337
(87) International publication number: WO 2009/134649

(56) References cited:
- EP-A- 1 389 025
- EP-A- 1 453 266
- ANDREAS F MOLISCH ET AL: "Reduction of Error Floor of Differential PSK in Mobile Radio Channels by Adaptive Sampling" IEEE TRANSACTIONS ON VEHICULAR TECHNOLOGY, IEEE SERVICE CENTER, PISCATAWAY, NJ, US, vol. 47, no. 4, 1 November 1998 (1998-11-01), XP011063771 ISSN: 0018-9545

## Description

### PRIORITY

### TECHNICAL FIELD

The present application relates to TETRA systems. In particular, the application relates to TETRA systems operating in direct mode in which the range of operation is extended.

### BACKGROUND

The TETRA (TErrestrial Trunked Radio) system is a digital communications system developed primarily for government agencies. This system is used by, for example, emergency services, police, fire departments, public transport services, and the military. The communication system is typically used on site by mobile devices. For devices that are able to communication over multiple channels (frequencies), a user actuates a knob on a PTT (Push-To-Talk) device to select a particular channel. Once the channel is selected, the device can transmit messages to and receive messages from individual devices in a group of devices that have selected the same channel and have been authorized to join the group.

A TETRA device is disclosed by EP 1 453 266 A.

TETRA devices are able to operate in different modes. In indirect mode, TETRA devices communicate through infrastructure such as one or more base stations. In direct mode (Direct Mode Operation or DMO), the TETRA devices communicate directly with one another. In DMO, TETRA devices can communicate even if they are outside the range of the base station, i.e. where network coverage has been lost. In DMO one (or a chain) of the TETRA terminals may be used as a relay for a signal so that devices that would normally be outside of the range of communications can still communicate without relying on infrastructure. In rescue situations, this allows direct communications between all of the devices in situations in which such communications may not be otherwise available, e.g., underground or in areas of bad coverage.

TETRA is a Time Division Multiple Access (TDMA) system in which multiple data signals are multiplexed in time for transmission over a common channel. This increases the efficiency of the spectrum because it allows several users to share a single frequency. The combined signals are transmitted in a frame, which is formed of four slots. More specifically, in the TETRA standard, the frames are combined into a multiframe that consists of 18 frames, which is then transmitted. The duration of the multiframe is 1.02 seconds. Each slot has a burst length of 14.167 ms and thus each frame has a length of 56.667 mS. The data structure has a length of 255 symbols or 510 modulation bits. The training sequence in the middle of the data allows the receiver in a receiving device to adjust an equalizer of the receiving device for optimum reception of the frame. The transmitter is only active during predetermined time periods, the data being transmitted in bursts, and thus reducing the drain on the battery.

The data is modulated onto a RF carrier using differential quaternary phase shift keying (DQPSK). This method shifts the phase of the RF carrier in steps of ± π/4. Specifically, bits are encoded such that phase-shifts of 45°, -45°, 135°, -135° respectfully correspond to data (also called symbols) 00, 01, 11, 10. In the DMO protocol, data is only transmitted in the first or third slot of each frame of a multiframe. The other slots are, in general, idle. This increases the versatility of the TETRA system using DMO.

Despite the versatility of the TETRA system, various limitations exist when devices operate using DMO. One concern is the communication range. Devices that operate in TMO (Trunked Mode Operation) communicate with other devices through base stations, which are disposed generally regularly. Thus, the TMO communication range is limited by the placement and coverage of the base stations. However, because the DMO devices communicate directly with one another, they are less likely to be able to maintain contact as the distance between them increases. It would be desirable to increase the connection range between individual TETRA devices to increase the communication range when operating using DMO.

### BRIEF DESCRIPTION OF THE DRAWINGS

Embodiments will now be described by way of example with reference to the accompanying drawings, in which:
FIG. 1 is a simulation of DQPSK modulation showing amplitude changes.
FIG. 2 is a simulation of DBPSK modulation showing amplitude changes.
FIGs. 3A and 3B are graphs of comparisons of peak and RMS values of error vector magnitude (EVM) for DQPSK modulation and DBPSK modulation.
FIG. 4 illustrates a multiframe, frame and slots according to one embodiment.
FIG. 5 illustrates an ongoing call protocol (as seen by the master) according to one embodiment.
FIG. 6 illustrates a call setup protocol (as seen by the master) according to one embodiment.
FIG. 7 illustrates a reservation protocol (as seen by the master) according to one embodiment.
FIG. 8 illustrates a mobile device according to one embodiment.
FIG. 9 illustrates a communication system according to one embodiment.

### DETAILED DESCRIPTION

A TETRA system, device, and method are presented in which an enhanced DMO uses π/2 shifted Differential Binary Phase Shift Keying (DBPSK). A protocol is used in which 510 bits are present in consecutive slots. The hardware platform can remain the same as or can be slightly altered from the standard TETRA hardware platform, most of the physical layer implementation may be used for different modes of operation (TMO, standard DMO and enhanced DMO). For a more detailed description of the TETRA system, reference is made to the ETSI (European Telecommunications Standards Institute) TETRA specifications.

For TETRA devices operating using DMO, the range of connection between devices is limited by the amount of power in the signal transmitted by the transmitted TETRA device/received by the receiving TETRA device, as well as the received signal quality/techniques used to extract the signal. The amount of received power is impacted mainly by the transmitted power, the antenna efficiency/gain of the transmitter and receiver, and the amount of signal loss/fading. The received power may be increased by increasing the amplification of the transmitter in the transmitting TETRA device (low peak to average ratio enables increasing the transition average power of an ETSI TETRA SU product) or improving the antenna, among other considerations. The radiated power from the antenna of a transmitter, however, does not increase linearly, whether the antenna is directional or omni-directional. Thus, doubling the transmitter power does not equate to doubling the communication range. Increasing the power transmitted by a device may lead to reduced battery life and increased heat dissipation in the device, as well as increased RF power absorption by the user of the device. The signal quality is determined, for example, by the sensitivity of the receiving TETRA device, which can be affected by the modulation scheme and protocols.

In general, increasing the rate at which data is transferred decreases the communication range due to the increased likelihood of packets being received with errors that cannot be corrected by the receiver. The packet length also impacts the communication range as a long packet may not get through in low signal strength cases whereas the probability of a shorter packet being received is higher (low modulation type (DBFSK) increases the reception sensitivity power level at the receiver). Thus, modulation schemes are employed to make best use of the available bandwidth and to increase the possible data rates. Several complex modulation schemes are used to take advantage of the various conditions. For DMO performance, it may be preferable to use a power efficient modulation scheme.

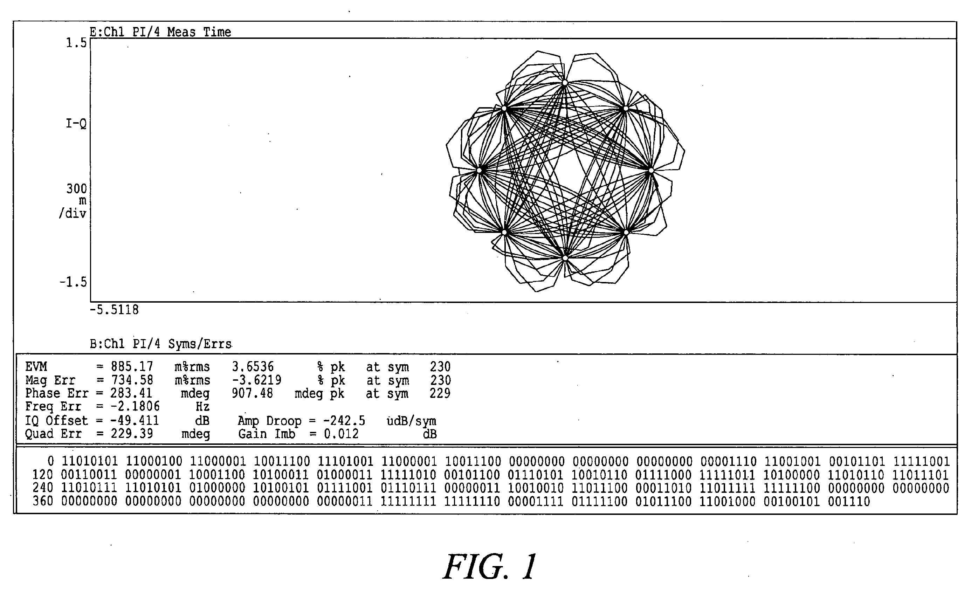

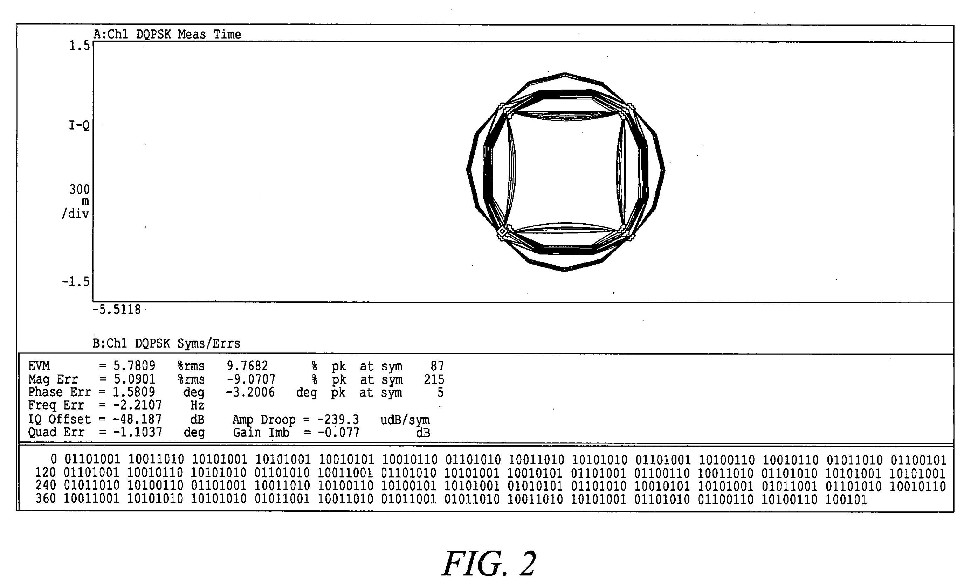

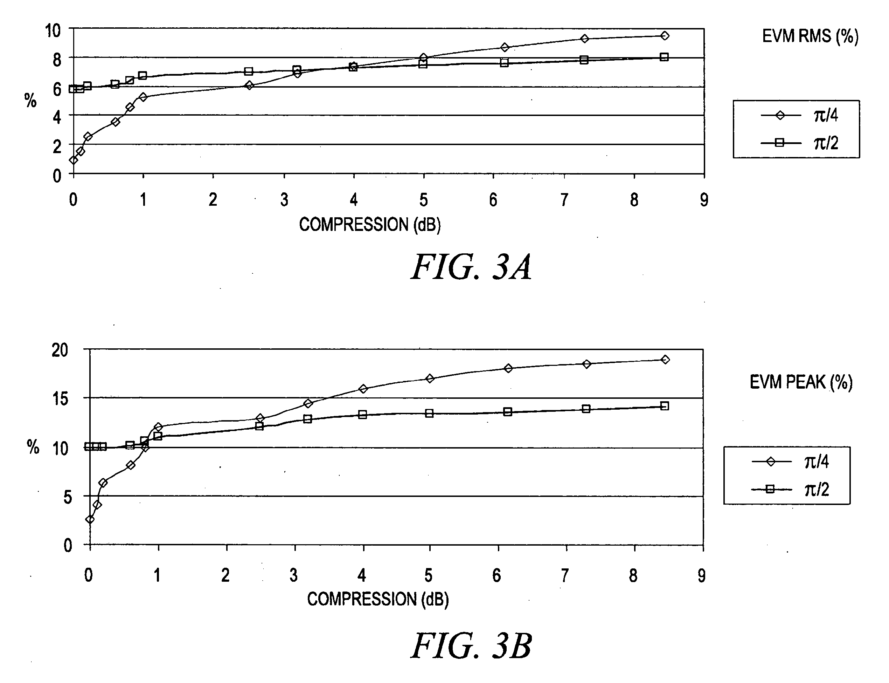

Regarding the transmitting TETRA device, this transmitter employs a power amplifier having a linearization scheme such as feedback or forward error correction. When feeding the power amplifier, maintaining a headroom of several dBs prevents the power amplifier from clipping the transmitted signal. Clipping causes distortion, which increases the errors when receiving and demodulating the signal. As shown in the simulation (using randomly-selected symbols) of Fig. 1, DQPSK contains a substantial amount of amplitude modulation, as shown by the amount of variation from the center of the circle in the figure. This amplitude modulation increases the amount of desired headroom and consequently decreases the amount of power available for transmission. DBPSK, as shown in the simulation (again using randomly-selected symbols) of Fig. 2, contains much less amplitude modulation - as shown the variation is contained within limited bands from the center of the figure. This decreased amplitude modulation translates, when using π/2 shifted DBPSK modulation, to a reduction in the peak-to-average of the baseband signal of about 1 dB without exceeding the EVM (Error Vector Magnitude) requirements of the ETSI TETRA standard. Plots of RMS and peak values of the EVM for π/2 shifted DBPSK and DQPSK modulation are shown in Figs. 3A and 3B, respectively. As can be seen by the results of these plots, using DBPSK modulation in DMO TETRA devices allows a reduction in the headroom, enabling the mean power of the transmitted RF signal to be increased and permitting an increase of several dB in output power compared with DMO TETRA devices using DQPSK modulation. This power increase is able to be accomplished without the addition of a more efficient power amplifier, which can also be used to further increase the output power but adds expense to the mobile device.

The Enhanced DMO is based on the DMO mobile device-mobile device ETSI requirements with the changes invoked from modulation switch from π/4 DQPSK to π/2 shifted DBPSK. In DBPSK, a binary 1 is transmitted by adding 180° to the current phase of the carrier and a binary 0 is transmitted by adding 0° to the current phase of the carrier. Since the π/2 shifted DBPSK uses one bit per symbol (while π/4 DQPSK uses two bits/symbol) and it is desirable to maintain the standard TETRA symbol rate of 18 kHz, the burst length is doubled, i.e. the burst length is increased such that the burst length is 28.33 mSec in the enhanced DMO employing DBPSK compared to 14.167 mSec in the standard DMO employing DQPSK. In this way, the number of bits per TETRA frame does not change.

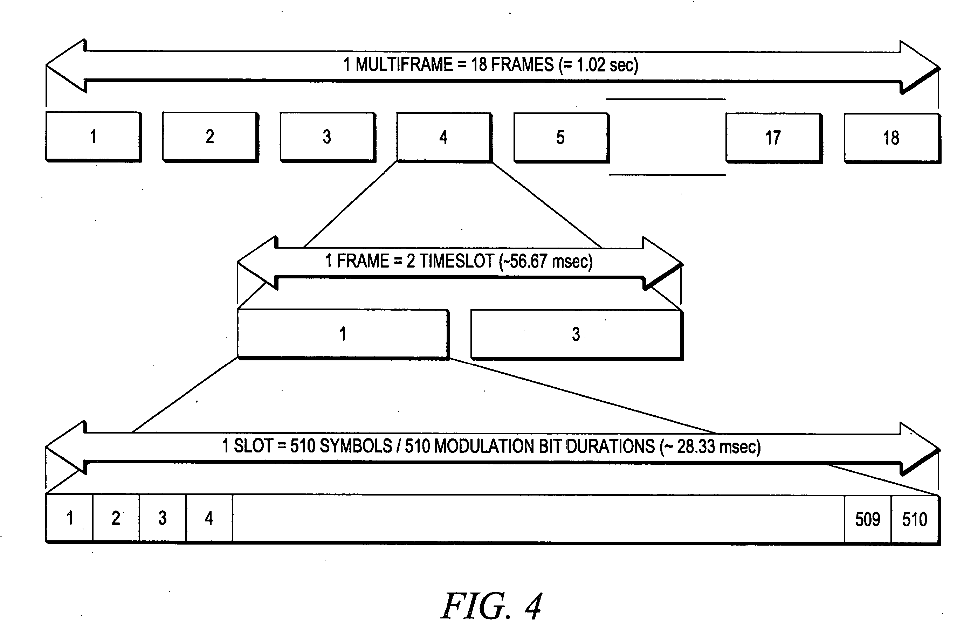

The multiframe and various divisions thereof in the enhanced DMO TETRA scheme using DBPSK are shown in Fig. 4. As illustrated and described above, each multiframe is subdivided into 18 frames, and has duration of 1.02 s. Each frame is subdivided into 2 slots, and has a duration of about 56.67 ms. Each slot is subdivided into 510 bits or 510 symbols (since each symbol contains 1 bit) and has a duration of about 28.33 ms. Each bit is thus about 55.6 µsec.

As described above, unlike DBPSK, standard DMO has four slots in each frame. However, only the first or third slots in the frame are used to transmit and receive data. Enhanced DMO shown in Fig. 4 supports transmission and reception of data in these slots, but since the burst length is twice the duration of the standard DMO burst, there are no idle slots between adjacent transmission and reception slots. This prevents the enhanced DMO protocol in certain instances from supporting repeaters (that increase the DMO distance by re-broadcasting the signal), gateway functionality (devices that function as a gateway between DMO and TMO devices), and frequency efficiency. If the physical hardware in the mobile device supports immediate switching (between adjacent slots), then the mobile device supports a call via repeater type 1B (duplex spacing between uplink and downlink) and gateway as long as the repeater and/or gateway supports enhanced DMO.

As DBPSK only provides 1 bit/symbol, this further leads to a gain sensitivity improvement of several dB in the DMO receiver compared to standard DMO. The total transmission and reception increase is several dB, which effectively doubles the range of the DMO connection.

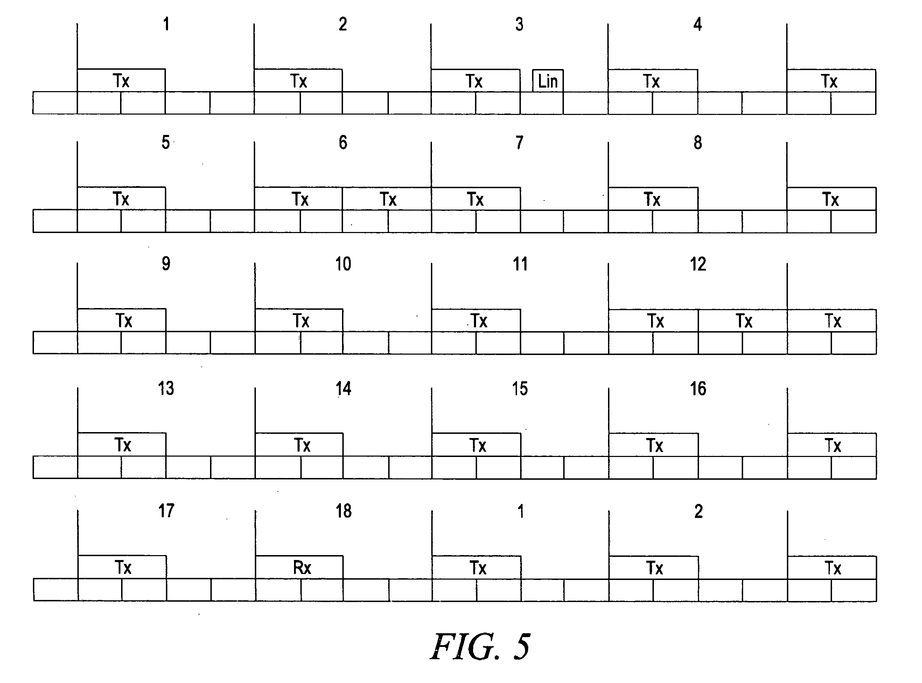

The protocols for various stages of calls are shown in Figs. 5-7. The combined protocols increase the communication range. To support the doubled burst length, a new protocol with minor changes was defined based on the current standard DMO protocol. Layers 2 to 7 remain with minor changes. As for the physical layer, most or all of the π/4 shifted DQPSK physical layer implementation of the standard TETRA device can be used including forward error correction, the automatic frequency correction, synchronization, pulse shaping, etc. using the same electronic components.

Turning to Figs. 5-7, these figures show implementation of the enhanced DMO protocol at various points in a transmission/reception (also referred to as a call) between devices in terms of the four slots of standard DMO protocol for ease of reference to conventional DMO protocol. As per conventional terminology, the device transmitting the call is the master and device(s) receiving the call are slaves. The enhanced DMO protocol for an ongoing call from the point of view of the master is shown in Fig. 5. As shown, the master uses only the first double slot (slots 1 and 2) in each of frames 1-17 to send (TX) the normal burst. A linearization burst is sent in a portion of the second double slot (as shown, this portion is in slot 3) in frame 3. A synchronization burst is transmitted in the second double slot at frame 6 and 12. This synchronization burst permits late entry during the multiframe. Such devices are able to start receiving data from the master a predetermined number of frames after the synchronization burst is received (e.g., at the start of the next multiframe).

The master listens to (i.e., receives - or as shown - RX) in the first double slot at frame 18 for a pre-emption opportunity to get an emergency request. Pre-emption allows another device to take over as the master in the next multiframe and begin transmitting data to the other device(s) receiving the call. One difference between standard and enhanced DMO are the number of pre-emption opportunities: the opportunities for pre-emption requests in standard DMO protocol and enhanced are six frames per multiframe and one frame (frame 18) per multiframe, respectively.

While the number of opportunities may differ between standard and enhanced DMO, conventional DMO linearization, synchronization, and pre-emption techniques are used when operating in enhanced DMO.

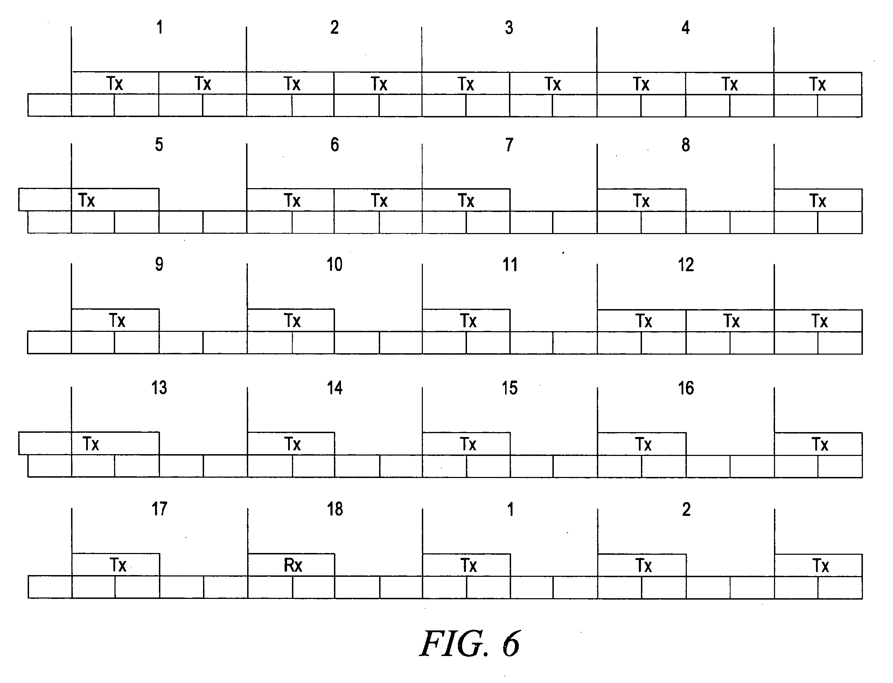

The protocol for the enhanced DMO during call setup (i.e. initiation of a call) is shown in Fig. 6. As illustrated, the master continuously transmits over nine double slots (4.5 frames). The receiving device detects the transmitted energy in frame 1, synchronization beats in frames 2 and 3, and a full synchronization burst in frame 4. As shown, the last double slot in the last frame of the setup is idle (in Fig. 6, frame 5, slots 3 and 4). This idle double slot is used as a gap between call setup (DSB) and the next normal burst, which minimizes the continuing slot sequence. Although call setup is shown as being initiated in frame 1, the call setup sequence could be started at any frame and the protocol, shown in the ongoing call protocol of Fig. 5, continues after the call setup sequence.

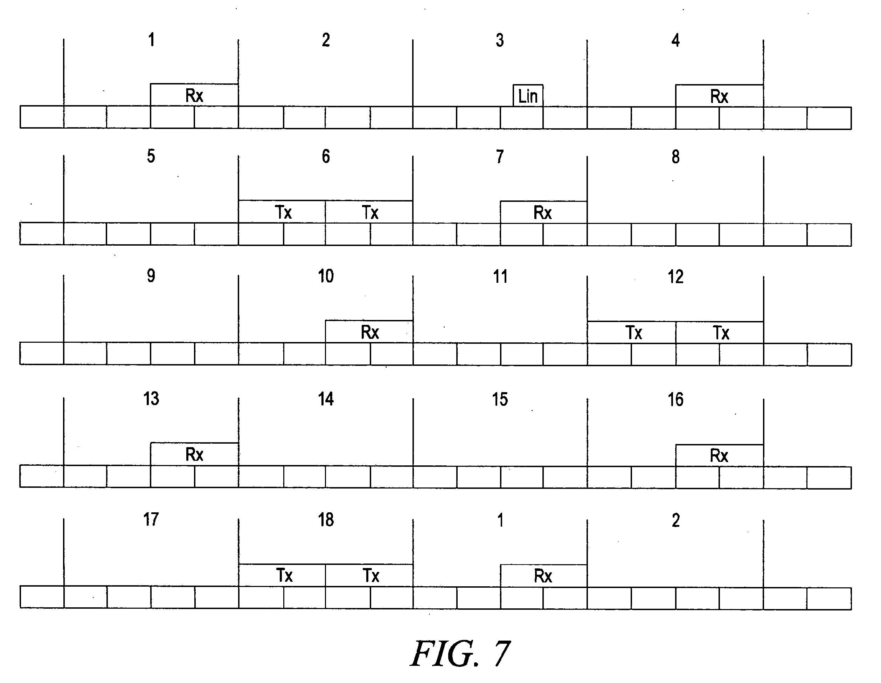

Figure 7 illustrates a protocol change for a reservation period. In the reservation period, the enhanced DMO implements a special protocol to increase the opportunities for a changeover between master and slave. As shown, the opportunities for a changeover are provided in frames 1, 4, 7, 10, 13, and 16. In these frames, the current master receives rather than transmits. The reception in frames 1, 4, 7, 10, 13, and 16 occurs in the second double slot of each of these frames. Similar to the ongoing call protocol shown in Fig. 5, a linearization burst is transmitted slot 3 at frame 3 and a synchronization burst is transmitted in slots 1-4 at frame 6 and 12. Unlike the ongoing call protocol, however, a synchronization burst is also transmitted in slots 1-4 at frame 18.

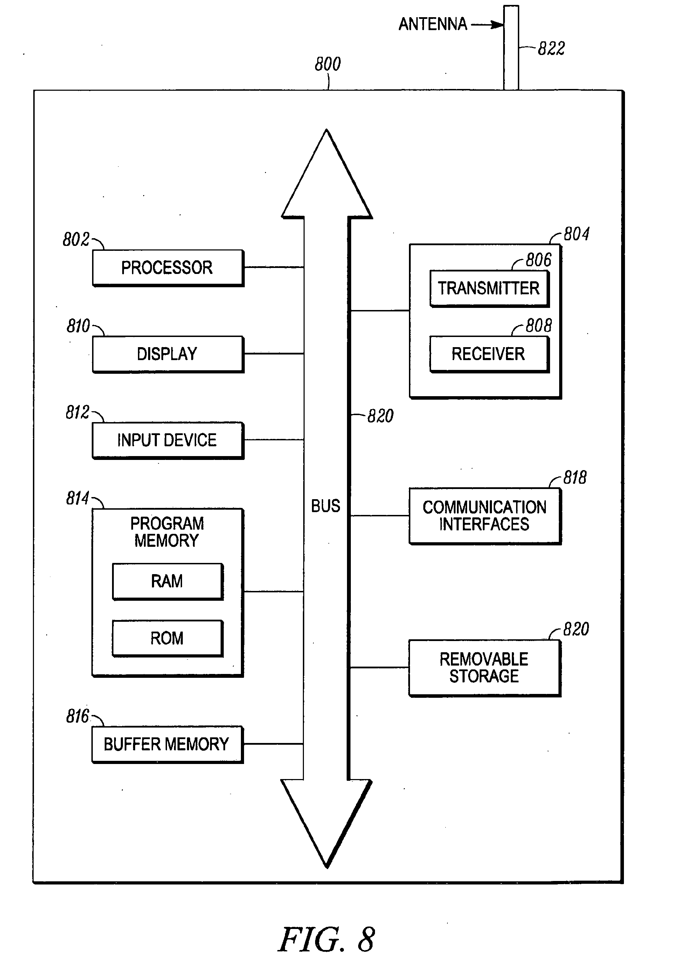

Figure 8 illustrates a block diagram of an exemplary device 800 that is able to operate using the enhanced DMO protocol. The device 800 contains, among other components, a processor 802, a transceiver 804 including transmitter circuitry 806 and receiver circuitry 808, an antenna 822, a display 810, an input device(s) 812, a program memory 814 for storing operating instructions that are executed by the processor 802, a buffer memory 816, one or more communication interfaces 818, and a removable storage 820. Although not shown, the device 800 also preferably includes an antenna switch, duplexer, circulator, or other highly isolative means (not shown) for intermittently providing information packets from the transmitter circuitry 806 to the antenna 822 and from the antenna 822 to the receiver circuitry 808. The device 800 is preferably an integrated unit containing at least all the elements depicted in FIG. 8, as well as any other elements necessary for the device 800 to perform its particular electronic function. Alternatively, the device 800 may comprise a collection of appropriately interconnected units or devices, wherein such units or devices perform functions that are equivalent to the functions performed by the elements of the device 800. For example, the device 800 may comprise a laptop computer and a Wireless Local Area Network (WLAN) card.

The processor 802 preferably includes one or more microprocessors, microcontrollers, DSPs, state machines, logic circuitry, or any other device or devices that process information based on operational or programming instructions. Such operational or programming instructions are preferably stored in the program memory 814. The program memory 814 may be an IC memory chip containing any form of random access memory (RAM) or read only memory (ROM), a floppy disk, a compact disk (CD) ROM, a hard disk drive, a digital video disk (DVD), a flash memory card or any other medium for storing digital information. One of ordinary skill in the art will recognize that when the processor 802 has one or more of its functions performed by a state machine or logic circuitry, the memory 814 containing the corresponding operational instructions may be embedded within the state machine or logic circuitry. The operations performed by the processor 802 and the rest of the device 800 are described in detail below.

The transmitter circuitry 806 and the receiver circuitry 808 enable the device 800 to communicate information packets to and acquire information packets from the other nodes. In this regard, the transmitter circuitry 806 and the receiver circuitry 808 include appropriate, conventional circuitry to enable digital or analog transmissions over a wireless communication channel. The transmitter circuitry 806 and the receiver circuitry 808 are designed to operate over an ad hoc networking air interface (e.g., BLUETOOTH, 802.11 WLAN, Wi-Fi, WiMAX, ... , etc.).

The implementations of the transmitter circuitry 806 and the receiver circuitry 808 depend on the implementation of the device 800. For example, the transmitter circuitry 806 and the receiver circuitry 808 may be implemented as an appropriate wireless modem, or as conventional transmitting and receiving components of two-way wireless communication devices. In the event that the transmitter circuitry 806 and the receiver circuitry 808 are implemented as a wireless modem, the modem can be internal to the device 800 or insertable into the device 800 (e.g., embodied in a wireless RF modem implemented on a Personal Computer Memory Card International Association (PCMCIA) card). For a wireless communication device, the transmitter circuitry 806 and the receiver circuitry 808 are preferably implemented as part of the wireless device hardware and software architecture in accordance with known techniques. One of ordinary skill in the art will recognize that most, if not all, of the functions of the transmitter circuitry 806 and/or the receiver circuitry 808 may be implemented in a processor, such as the processor 802. However, the processor 802, the transmitter circuitry 806, and the receiver circuitry 808 have been artificially partitioned herein to facilitate a better understanding.

The receiver circuitry 808 is capable of receiving RF signals from at least one band and optionally more bands, if the communications with the proximate device are in a frequency band other than that of the network communications. The receiver circuitry 808 may optionally comprise a first receiver and a second receiver, or one receiver capable of receiving in two or more bandwidths. The receiver 808, depending on the mode of operation, may be attuned to receive, for example, Bluetooth or WLAN, such as 802.11, communication signals. The transceiver 804 includes at least one set of transmitter circuitry 806. The at least one transmitter 806 may be capable of transmitting to multiple devices potentially in multiple frequency bands.

The antenna 822 comprises any known or developed structure for radiating and receiving electromagnetic energy in the frequency range containing the wireless carrier frequencies. The buffer memory 816 may be any form of volatile memory, such as RAM, and is used for temporarily storing received information packets. The display 810 may be an LCD, OLED, or any other known display. The Input Device 812 may be one or more of: an alpha-numeric keyboard, isolated buttons, soft and/or hard keys, touch screen, jog wheel, or any other known input device.

When the device 800 is constructed to receive video information from a video source, the device 800 preferably further includes a video decoder capable of decoding the current Moving Picture Experts Group (MPEG) standard or some other video decoding standard. When the device 800 is further capable of transmitting video information, the device 800 preferably further includes a video encoder capable of encoding the video data into at least one of the foregoing video standards. Such video encoder and decoder is preferably implemented as part of the processor 802.

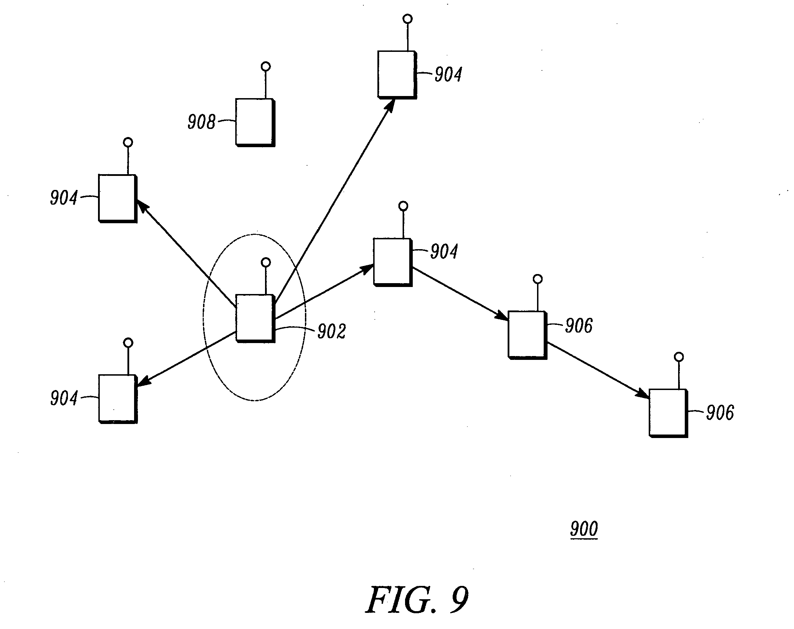

A system employing the enhanced DMO protocol is shown in Fig. 9. As shown, the system 900 contains multiple devices 902, 904, 906, 908 at least some of which are able to operate using the enhanced DMO protocol. One of the devices (the master) 902 has established communication with at least some of the other devices 904, 906. This communication is direct, i.e., device-to-device and which does not employ infrastructure such as base stations. As shown, the master 902 transmits to slaves 904, 906 either directly or using one of the slaves 904 as an intermediary to forward the data to other slaves 906. Other devices 908, which may be in range of the master 902, may not be capable of or be allowed to participate in the call.

It will be understood that the terms and expressions used herein have the ordinary meaning as is accorded to such terms and expressions with respect to their corresponding respective areas of inquiry and study except where specific meanings otherwise have been set forth herein. Relational terms such as first and second and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises ...a" does not, without more constraints, preclude the existence of additional identical elements in the process, method, article, or apparatus that comprises the element.

It will be appreciated that some or all functions could be implemented by a state machine that has no stored program instructions, or in one or more application specific integrated circuits (ASICs), in which each function or some combinations of certain of the functions are implemented as custom logic. Of course, a combination of the two approaches could be used. Thus, methods and means for these functions have been described herein.

In various embodiments, the disclosed methods may be implemented as a computer program product for use with a computer system. Such implementations may include a series of computer instructions fixed either on a tangible medium, such as a computer readable medium (e.g., a diskette, CD-ROM, ROM, or fixed disk) or transmittable to a computer system, via a modem or other interface device, such as a communications adapter connected to a network over a medium. The medium may be either a tangible medium (e.g., optical or analog communications lines) or a medium implemented with wireless techniques (e.g., microwave, infrared or other transmission techniques). The series of computer instructions embodies all or part of the functionality previously described herein with respect to the system. Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable medium with accompanying printed or electronic documentation (e.g., shrink wrapped software), preloaded with a computer system (e.g., on system ROM or fixed disk), or distributed from a server or electronic bulletin board over the network (e.g., the Internet or World Wide Web). Of course, some embodiments of the invention may be implemented as a combination of both software (e.g., a computer program product) and hardware. Still other embodiments are implemented as entirely hardware, or entirely software (e.g., a computer program product).

A device (such as a mobile device) and method of extending the communication range between devices is described. The device and method employ enhanced DMO using a π/2 DBPSK modulation protocol in which consecutive slots in a time-division multiplexing (TDM) frame of two slots contain one symbol. The slots in the non-ETSI standard π/2 DBPSK modulation protocol are twice the length of the ETSI standard π/4 DQPSK modulation protocol (i.e., double slots). Devices using enhanced DMO engender only minor changes in the physical layer, as well as a small amount of software development, from those configured for only standard DMO. Thus, existing TETRA devices may be able to support enhanced DMO by upgrading the software in these devices. If the device is to support immediate switching between adjacent slots, the enhanced DMO can use a standard Tetra protocol, except for a call setup sequence.

## Claims

1. A method of extending the range of direct mode operation "DMO" in a Terrestrial Trunked Radio "TETRA" device (800), the method comprising employing a 7t/2 shifted Differential Binary Phase Shift Keying "DBPSK" modulation protocol in which consecutive slots in a time-division multiplexing frame of four slots "first and second double slots" of a multiframe of eighteen frames contain 510 bits to transfer data directly between the TETRA device (800) and another TETRA device employing the π/2 shifted DBPSK modulation protocol to extend the communication range of the TETRA devices.

2. The method of claim 1, wherein during an ongoing call transmission occurs during all four slots of at least one frame in the multiframe.

3. The method of claim 1, wherein immediate switching between transmission and reception in a single frame is forbidden using the π/2 shifted DBPSK modulation protocol.

4. The method of claim 3, further comprising using a standard π/4 Differential Quaternary Phase Shift Keying "DQPSK" Tetra protocol, except for a call setup sequence, if immediate switching between transmission and reception in a single frame is supported.

5. The method of claim 1, wherein during an ongoing call only a single opportunity for a pre-emption request exists in the multiframe in the last frame of the multiframe.

6. The method of claim 1, wherein during an ongoing call a single linearization burst is sent in only a portion of the second double slot in one of the frames of the multiframe and a synchronization burst is transmitted in the second double slot of multiple frames of the multiframe other than the one of the frames of the multiframe.

7. The method of claim 1, wherein to set up a call between a master of the call and a slave of the call, the master continuously transmits over multiple double slots of the multiframe, the number of continuous double slots sufficient to permit the slave to initially detect energy transmitted from the master and then synchronize to the master, a single idle double slot being disposed between the double slots containing continuous transmission and initiation of an ongoing call protocol.

8. The method of claim 1, wherein during an ongoing call between a master of the call and a slave of the call, of the eighteen frames of the multiframe, the master transmits data of the call during the first double slots of the first seventeen frames, sets aside the first double slot of the eighteenth frame for reception of a pre-emption request by the slave, transmits a linearization burst in only a portion of the double slot of the third frame, transmits synchronization bursts in the second double slots of the sixth and twelfth frames, and leaves the remaining slots of the multiframe idle.

9. The method of claim 1, wherein to set up a call between a master of the call and a slave of the call, of the eighteen frames in the multiframe, the master: continuously transmits over nine double slots of the multiframe, sets aside the first double slot of the eighteenth frame for reception of a pre-emption request by the slave, transmits synchronization bursts in the second double slots of the sixth and twelfth frames, and leaves the remaining slots of the multiframe idle.

10. The method of claim 1, wherein in a reservation period of a call between a master of the call and a slave of the call to implement a changeover between the master and slave, of the eighteen frames in the multiframe, the master: sets aside the second double slot of each of the first, fourth, seventh, tenth, thirteenth and sixteenth frames to receive, transmits a linearization burst in only a portion of the double slot of the third frame, transmits synchronization bursts in the first and second double slots of the sixth, twelfth, and eighteenth frames, and leaves the remaining slots of the multiframe idle.

11. A Terrestrial Trunked Radio "TETRA" device (800) comprising a processor (802), a transmitter (806), and a receiver (808), the processor (802) configured to employ a π/2 shifted Differential Binary Phase Shift Keying "DBPSK" modulation protocol during direct mode operation "DMO" communication with another TETRA device employing the π/2 shifted DBPSK modulation protocol, wherein in the protocol consecutive slots in a time-division multiplexing frame of four slots "first and second double slots" of a multiframe of eighteen frames contain 510 bits to transfer data directly between the TETRA device (800) and the other TETRA device and thereby extend the communication range between the TETRA devices.

12. The device of claim 11, wherein in the protocol during an ongoing call at least one of:
the transmitter (806) transmits during all four slots of at least one frame in the multiframe,
only a single opportunity for a pre-emption request by the transmitter (806) exists in the multiframe in the last frame of the multiframe, or
a single linearization burst is sent by the transmitter (806) in only a portion of the second double slot in one of the frames of the multiframe and a synchronization burst is transmitted in the second double slot of multiple frames of the multiframe other than the one of the frames of the multiframe.

13. The device of claim 11, wherein immediate switching between transmission and reception in a single frame by the transmitter (806) is forbidden using the π/2 shifted DBPSK modulation protocol.

14. The device of claim 13, wherein the device is configured to use a standard π/4 Differential Quaternary Phase Shift Keying "DQPSK" Tetra protocol, except for a call setup sequence, if immediate switching between transmission and reception in a single frame is supported.

15. The device of claim 11, wherein to set up a call between a master of the call and a slave of the call, the transmitter (806) of the master continuously transmits over multiple double slots of the multiframe, the number of continuous double slots sufficient to permit the slave to initially detect energy transmitted from the master and then synchronize to the master, a single idle double slot being disposed between the double slots containing continuous transmission and initiation of an ongoing call protocol.

## Patentansprüche

1. Verfahren zum Vergrößern der Reichweite in Direct Mode Operation ("DMO") in einem Terrestrial Trunked Radio-Gerät TETRA") (800), wobei das Verfahren den Einsatz eines um π/2 phasenverschobenen Modulationsprotokolls mit Differential Binary Phase Shift Keying ("DBPSK") umfasst, in dem aufeinanderfolgende Zeitschlitze in einem Zeitvielfachmultiplexrahmen aus vier Zeitschlitzen ("erster und zweiter Doppelzeitschlitz") eines Multirahmens bestehend aus achtzehn Rahmen 510 Bits enthalten, um Daten direkt zwischen dem TETRA-Gerät (800) und einem anderen TETRA-Gerät unter Verwendung des um π/2 phasenverschobenen DBPSK-Modulationsprotokolls auszutauschen, um so die Kommunikationsreichweite der TETRA-Geräte zu vergrößern.

2. Verfahren nach Anspruch 1, wobei während eines laufenden Gesprächs eine Übertragung in allen vier Zeitschlitzen von wenigstens einem Rahmen im Multirahmen stattfindet.

3. Verfahren nach Anspruch 1, wobei unmittelbares Umschalten zwischen Senden und Empfangen in einem einzelnen Rahmen über das um π/2 phasenverschobene DBPSK-Modulationsprotokoll unterbunden wird.

4. Verfahren nach Anspruch 3, ferner mit Einsatz eines TETRA-Standardprotokolls mit π/4 Differential Quaternary Phase Shift Keying ("DQPSK"), außer in der Rufaufbauphase, falls direktes Umschalten zwischen Senden und Empfangen in einem einzelnen Rahmen unterstützt wird.

5. Verfahren nach Anspruch 1, wobei während eines laufenden Gesprächs nur eine einzige Gelegenheit für eine Präemptionsanfrage für den Multirahmen im letzten Rahmen des Multirahmens besteht.

6. Verfahren nach Anspruch 1, wobei während eines laufenden Gesprächs ein einzelner Linearisierungs-Burst nur in einem Teil des zweiten Doppelzeitschlitzes in einem der Rahmen des Multirahmens gesendet wird, und ein Synchronisierungs-Burst im zweiten Doppelzeitschlitz in mehreren Rahmen des Multirahmens übertragen wird, die mit dem zuvor genannten Rahmen des Multirahmens nicht identisch sind.

7. Verfahren nach Anspruch 1, wobei, um ein Gespräch zwischen einem Master-Gerät und einem Slave-Gerät des Gesprächs aufzubauen, das Master-Gerät kontinuierlich in mehreren Doppelzeitschlitzen des Multirahmens überträgt, wobei die Anzahl der kontinuierlich aktiven Doppelzeitschlitze ausreicht, damit das Slave-Gerät die vom Master-Gerät übertragene Energie zunächst erfassen und sich dann mit dem Master-Gerät synchronisieren kann, wobei ein einzelner leerer Doppelzeitschlitz zwischen den Doppelzeitschlitzen für kontinuierliche Übertragung und Initiierung eines Protokolls für ein andauerndes Gespräch angeordnet ist.

8. Verfahren nach Anspruch 1, wobei während eines andauernden Gesprächs zwischen Master-Gerät und Slave-Gerät des Gesprächs das Master-Gerät aus den achtzehn Rahmen des Multirahmens Gesprächsdaten in den ersten Doppelzeitschlitzen der ersten siebzehn Rahmen überträgt, den ersten Doppelzeitschlitz des achtzehnten Rahmens für eine Präemptionsanfrage des Slave-Geräts bereitstellt, in nur einem Teil des Doppelzeitschlitzes des dritten Rahmens einen Linearisierungs-Burst überträgt, im zweiten Doppelzeitschlitz des sechsten und des zwölften Rahmens Synchronisierungs-Bursts überträgt und die übrigen Zeitschlitze des Multirahmens leer lässt.

9. Verfahren nach Anspruch 1, wobei, um ein Gespräch zwischen einem Master-Gerät und einem Slave-Gerät des Gesprächs aufzubauen, das Master-Gerät aus den achtzehn Rahmen des Multirahmens: kontinuierlich in neun Doppelzeitschlitzen des Multirahmens überträgt, den ersten Doppelzeitschlitz des achtzehnten Rahmens für den Empfang einer Präemptionsanfrage durch das Slave-Gerät bereitstellt, im zweiten Doppelzeitschlitz des sechsten und des zwölften Rahmens Synchronisierungs-Bursts überträgt, und die übrigen Zeitschlitze des Multirahmens leer lässt.

10. Verfahren nach Anspruch 1, wobei, um in einer Reservierungsperiode eines Gesprächs zwischen einem Master-Gerät und einem Slave-Gerät des Gesprächs einen Übergang zwischen Master-Gerät und Slave-Gerät einzuleiten, das Master-Gerät aus den achtzehn Rahmen des Multirahmens: den zweiten Doppelzeitschlitz des ersten, des vierten, des siebten, des zehnten, des dreizehnten und des sechzehnten Rahmens für den Empfang bereitstellt, in nur einem Teil des Doppelzeitschlitzes des dritten Rahmens einen Linearisierungs-Burst überträgt, im zweiten Doppelzeitschlitz des sechsten, des zwölften und des achtzehnten Rahmens Synchronisierungs-Bursts überträgt, und die übrigen Zeitschlitze des Multirahmens leer lässt.

11. Terrestrial Trunked Radio-Gerät ("TETRA") (800), umfassend einen Prozessor (802), einen Sender (806) und einen Empfänger (808), wobei der Prozessor (802) konfiguriert ist, um ein um π/2 phasenverschobenes Modulationsprotokoll mit Differential Binary Phase Shift Keying ("DBPSK") in Direct Mode Operation-Kommunikation ("DMO") mit einem anderen TETRA-Gerät einzusetzen, welches das um π/2 phasenverschobene DBPSK-Modulationsprotokoll verwendet, wobei im Protokoll die kontinuierlichen Zeitschlitze in einem Zeitvielfachmultiplexrahmen aus vier Zeitschlitzen ("erster und zweiter Doppelzeitschlitz") eines Multirahmens bestehend aus achtzehn Rahmen 510 Bits enthalten, um Daten direkt zwischen dem TETRA-Gerät (800) und dem anderen TETRA-Gerät auszutauschen und so die Kommunikationsreichweite der TETRA-Geräte zu vergrößern.

12. Gerät nach Anspruch 11, wobei im Protokoll während eines andauernden Gesprächs wenigstens eines der Folgenden ausgeführt wird:
der Sender (806) überträgt in allen vier Zeitschlitzen wenigstens eines Rahmens im Multirahmen,
nur eine einzige Gelegenheit für eine Präemptionsanfrage durch den Sender (806) existiert für den Multirahmen im letzten Rahmen des Multirahmens, oder
ein einzelner Linearisierungs-Burst wird durch den Transmitter (806) in nur einem Teil des zweiten Doppelzeitschlitzes in einem der Rahmen des Multirahmens gesendet und ein Synchronisierungs-Burst wird im zweiten Doppelzeitschlitz in mehreren Rahmen des Multirahmens gesendet, die mit dem zuvor genannten Rahmen des Multirahmens nicht identisch sind.

13. Gerät nach Anspruch 11, wobei unmittelbares Umschalten zwischen Senden und Empfangen in einem einzelnen Rahmen durch den Sender (806) über das um π/2 phasenverschobene DBPSK-Modulationsprotokoll unterbunden wird.

14. Gerät nach Anspruch 13, wobei das Gerät konfiguriert ist, um ein TETRA-Standardprotokoll mit π/4 Differential Quaternary Phase Shift Keying ("DQPSK") einzusetzen, außer in der Rufaufbauphase, falls direktes Umschalten zwischen Senden und Empfangen in einem einzelnen Rahmen unterstützt wird.

15. Gerät nach Anspruch 11, wobei der Sender (806) des Master-Geräts, um einen Anruf zwischen einem Master-Gerät und einem Slave-Gerät des Gesprächs aufzubauen, kontinuierlich in mehreren Doppelzeitschlitzen des Multirahmens übermittelt, wobei die Anzahl der kontinuierlichen Doppelzeitschlitze ausreicht, um es dem Slave-Gerät zu ermöglichen, die vom Master-Gerät ausgesandte Energie zunächst zu erfassen und sich dann mit dem Master-Gerät zu synchronisieren, wobei ein einzelner leerer Doppelzeitschlitz zwischen den Doppelzeitschlitzen mit kontinuierlicher Übermittlung und der Einleitung des Protokolls für ein laufendes Gespräch angeordnet ist.

## Revendications

1. Procédé d'extension de la portée de fonctionnement en mode direct "DMO" dans un dispositif "TETRA" de radiocommunication terrestre à ressources partagées (800), le procédé comprenant l'utilisation d'un protocole "DBPSK" de modulation binaire différentielle par déplacement de phase à déphasage de π/2, dans lequel des créneaux consécutifs dans une trame de multiplexage par répartition dans le temps de quatre créneaux "premier et deuxième doubles créneaux" d'une multi-trame de dix-huit trames contiennent 510 bits pour le transfert direct de données entre le dispositif TETRA (800) et un autre dispositif TETRA utilisant le protocole de modulation DBPSK à déphasage de π/2 pour étendre la portée de communication des dispositifs TETRA.

2. Procédé selon la revendication 1, dans lequel, pendant un appel entrant, une transmission se produit pendant l'ensemble des quatre créneaux d'au moins une trame de la multi-trame.

3. Procédé selon la revendication 1, dans lequel une commutation immédiate entre une transmission et une réception d'une seule trame est interdite avec l'utilisation du protocole de modulation DBPSK à déphasage de π/2.

4. Procédé selon la revendication 3, comprenant en outre l'utilisation d'un protocole TETRA "DBPSK" standard de modulation quaternaire différentielle par déplacement à déphasage de π/4, sauf pour une séquence d'établissement d'appel, si une commutation immédiate entre une transmission et une réception d'une seule trame est supportée.

5. Procédé selon la revendication 1, dans lequel, pendant un appel entrant, il n'existe qu'une seule opportunité pour une demande de préemption dans la multi-trame, dans la dernière trame de la multi-trame.

6. Procédé selon la revendication 1, dans lequel, pendant un appel entrant, une seule salve de linéarisation est envoyée dans seulement une partie du deuxième double créneau dans l'une des trames de la multi-trame et une salve de synchronisation est transmise dans le deuxième double créneau de plusieurs trames de la multi-trame autres que ladite une des trames de la multi-trame.

7. Procédé selon la revendication 1, dans lequel, pour l'établissement d'un appel entre un maître de l'appel et un esclave de l'appel, le maître transmet en continu sur plusieurs doubles créneaux de la multi-trame, le nombre de doubles créneaux continus suffisant pour permettre à l'esclave de détecter initialement l'énergie transmise par le maître puis de se synchroniser sur le maître, un seul double créneau inactif étant disposé entre les doubles créneaux contenant une transmission continue et le démarrage d'un protocole d'appel entrant.

8. Procédé selon la revendication 1, dans lequel, pendant un appel entrant entre un maître de l'appel et un esclave de l'appel, sur les dix-huit trames de la multi-trame, le maître transmet des données de l'appel pendant le premier double créneau des dix-sept premières trames, met de côté le premier double créneau de la dix-huitième trame pour la réception d'une demande de préemption par l'esclave, transmet une salve de linéarisation dans seulement une partie du double créneau de la troisième trame, transmet des salves de synchronisation dans les deuxièmes doubles créneaux des sixième et douzième trames, et laisse inactifs les créneaux restants de la multi-trame.

9. Procédé selon la revendication 1, dans lequel, pour l'établissement d'un appel entre un maître de l'appel et un esclave de l'appel, sur les dix-huit trames de la multi-trame, le maître : transmet en continu sur neuf doubles créneaux de la multi-trame, laisse de côté le premier double créneau de la dix-huitième trame pour la réception d'une demande de préemption par l'esclave, transmet des salves de synchronisation dans les deuxièmes doubles créneaux des sixième et douzième trames, et laisse inactifs les créneaux restants de la multi-trame inactif.

10. Procédé selon la revendication 1, dans lequel une période de réservation d'un appel entre un maître de l'appel et un esclave de l'appel pour la mise en oeuvre d'un transfert entre le maître et l'esclave, sur les dix-huit trames de la multi-trame, le maître : laisse de côté le deuxième double créneau de chacune des première, quatrième, septième, dixième, treizième et seizième trames pour la réception, transmet une salve de linéarisation dans seulement une partie du double créneau de la troisième trame, transmet des salves de synchronisation dans le premier et le deuxième doubles créneaux des sixième, douzième et dix-huitième trames, et laisse inactifs les créneaux restants de la multi-trame.

11. Dispositif "TETRA" de radiocommunication terrestre à ressources partagées (800) comprenant un processeur (802), un émetteur (806) et un récepteur (808), le processeur (802) étant configuré pour utiliser un protocole "DBPSK" de modulation binaire différentielle par déplacement de phase à déphasage de π/2 pendant une communication en mode direct "DMO" avec un autre dispositif TETRA utilisant le protocole de modulation DBPSK à déphasage de π/2, dans lequel, dans le protocole, des créneaux consécutifs dans une trame de multiplexage par répartition dans le temps de quatre créneaux "premier et deuxième doubles créneaux" d'une multi-trame de dix-huit trames contiennent 510 bits pour le transfert direct de données entre le dispositif TETRA (800) et l'autre dispositif TETRA, et étendent ainsi la portée de communication des dispositifs TETRA.

12. Dispositif selon la revendication 11, dans lequel, dans le protocole, pendant un appel entrant, on a au moins l'une des situations suivantes :
l'émetteur (806) transmet pendant l'ensemble des quatre créneaux d'au moins une trame de la multi-trame,
il n'existe qu'une seule opportunité pour une demande de préemption par l'émetteur (806) dans la multi-trame, dans la dernière trame de la multi-trame, ou
une seule salve de linéarisation est envoyée par l'émetteur (806) dans seulement une partie du deuxième double créneau dans l'une des trames de la multi-trame et une salve de synchronisation est transmise dans le deuxième double créneau de plusieurs trames de la multi-trame autres que ladite une des trames de la multi-trame.

13. Dispositif selon la revendication 11, dans lequel une commutation immédiate entre une transmission et une réception d'une seule trame par l'émetteur (806) est interdite avec l'utilisation du protocole de modulation DBPSK à déphasage de π/2.

14. Dispositif selon la revendication 13, dans lequel le dispositif est configuré pour utiliser un protocole TETRA "DBPSK" standard de modulation quaternaire différentielle par déplacement à déphasage de π/4, sauf pour une séquence d'établissement d'appel, si une commutation immédiate entre une transmission et une réception d'une seule trame est supportée.

15. Dispositif selon la revendication 11, dans lequel, pour l'établissement d'un appel entre un maître de l'appel et un esclave de l'appel, l'émetteur (806) du maître transmet en continu sur plusieurs doubles créneaux de la multi-trame, le nombre de doubles créneaux continus suffisant pour permettre à l'esclave de détecter initialement l'énergie transmise par le maître puis de se synchroniser sur le maître, une seule double créneau inactif étant disposé entre les doubles créneaux contenant une transmission continue et le démarrage d'un protocole d'appel entrant.
